Europäisches Patentamt

European Patent Office

Office européen des brevets

(19)

(11) Publication number: **0 461 690 A2**

# EUROPEAN PATENT APPLICATION

(12)

(21) Application number: **91201214.3**

(22) Date of filing: **21.05.91**

(51) Int. Cl.⁵: **G21B 1/00**

(30) Priority: **13.06.90 US 538640**

(43) Date of publication of application:
**18.12.91 Bulletin 91/51**

(84) Designated Contracting States:
**DE FR GB IT NL**

(71) Applicant: **THE BOEING COMPANY**
**P.O. Box 3707 M.S. 6Y-25**
**Seattle WA 98124-2207(US)**

(72) Inventor: **Momenthy, Albert Mohring**
**16215 Southeast 292nd Street**
**Kent, Washington 98042(US)**

(74) Representative: **Prins, Hendrik Willem et al**
**Octrooibureau Arnold & Siedsma**
**Sweelinckplein, 1**
**NL-2517 GK The Hague(NL)**

(54) **Cold nuclear fusion thermal generator.**

(57) A method an apparatus are provided for generating heat energy by the cold fusion of hydrogen with boron or lithium in an electrolytic cell.

This invention relates to a novel method and apparatus for generating heat energy by means of cold nuclear fusion.

## BACKGROUND

It is well known that large amounts of heat energy may be liberated by nuclear fission or nuclear fusion. While heat from the fission of high atomic weight fuels has been used for many years to generate electricity, no practical method of using nuclear fusion to produce energy has been discovered.

To-date, most fusion research has centered on creating a plasma of low atomic weight constituents such as deuterium, helium, and tritium. Fusion reactions occur when the nuclei in the plasma are brought close enough together at a high enough energy to overcome the repulsive force between positively charged nuclei stripped of their electrons. This energy requirement is customarily expressed in terms of a temperature defined as $E_b/k$; where:

$E_b$ is the binding energy of the reacting species;

k is the Boltzman Constant = $8.62 \times 10^{-11}$ Mev/$^\circ$K.

Using this definition, an ignition temperature of $10^8$ $^\circ$K would be required to initiate a fusion reaction capable of producing an energy release in the range of 3 to 18 MeV per event. Plasmas at such temperatures cannot be contained in conventional vessels. Therefore, most of the research has been directed towards confining plasmas in magnetic fields or pelletizing fusionable fuel so that it can be ignited by high energy laser or particle beams. Currently, "hot" fusion has not provided a net output of usable energy.

In the late 1940's it was theorized that muons, negatively charged elementary particles which are about 206 times more massive than electrons, could be used to catalyze fusion reactions between low atomic weight constituents such as protons and deuterons. Muon catalyzed nuclear fusion was later observed.

In 1982 major energy limiting drawbacks associated with muon catalyzed fusion were removed by the discovery that overall reaction rates were higher than previously predicted and yields of more than 150 fusions/muon were attainable. It had been postulated that reaction rates of 100 fusions/muon would be required for the development of a reactor that has a net positive power output. This discovery increased the interest in and promise for the practical development of cold fusion. However, the near term development of commercial reactors that require large numbers of muons is not likely, even if net power production is possible. Success with muon catalyzed nuclear fusion resulted in a serious questioning of the hypotheses associated with efforts to control high temperature fusion.

In 1989, it was reported that deuterium ions that are galvanostatically compressed into a palladium electrode fuse at low temperature upon application of relatively small electric currents. The fusion reaction purportedly produces helium and energetic neutrons by the formula

$$D + D \rightarrow {}^3He + n + 3.2 MeV.$$

The production of fast neutrons requires heavy shielding.

Accordingly, it is the primary object of this invention to provide an alternate method of generating heat energy by cold fusion which does not produce neutron radiation and which is based on the use of readily available and inexpensive fuels. As used herein, the term cold fusion means a reaction between at least two nuclei to produce one or more new nuclei plus energy where the reaction constituents are not contained in a plasma.

## BRIEF SUMMARY

In accordance with a preferred embodiment, a cold fusion thermal generator is provided which uses the electrolysis of water ($H_2O$) in the electrolyte to pack hydrogen in a specially adapted cathode. The cathode comprises a matrix of boron and a molecular sieve that selectively adsorbs hydrogen and releases helium. An inert hydrogen adsorbing metal such as palladium or platinum may be included in the matrix to improve electrical conductivity. The anode comprises an electrically conductive chemically resistant metal such as Monel and preferably surrounds the cathode. The electrodes are retained in a pressure vessel adjacent a container for a heat exchange fluid. Vents are provided for gases produced by the electrolysis and fusion reactions. Means are provided to replenish the electrolyte while the cell is operating.

To operate the reactor, a current of suitable density and voltage is applied across the electrodes. Hydrogen is generated by electrolysis of water and adsorbed in the cathode at high densities. The protons fuse with the boron nuclei by the reaction

$$p + {}^{11}B \rightarrow 3\alpha \ (8.7 \ MeV).$$

The heat released by the reaction is transferred through the electrolyte in the pressurized vessel into a heat exchange fluid by conventional means. The helium formed from the alpha particles and oxygen from the electrolysis are vented from the cell. The rate of reaction may be controlled by controlling the rate of electrolytic hydrogen production.

A like method of producing heat by fusion entails substituting Lithium for boron at the cathode and applying appropriate current density and voltage to cause the following reaction

$$p + {}^{6}Li \rightarrow {}^{3}He + \alpha \ (4.0 \ MeV).$$

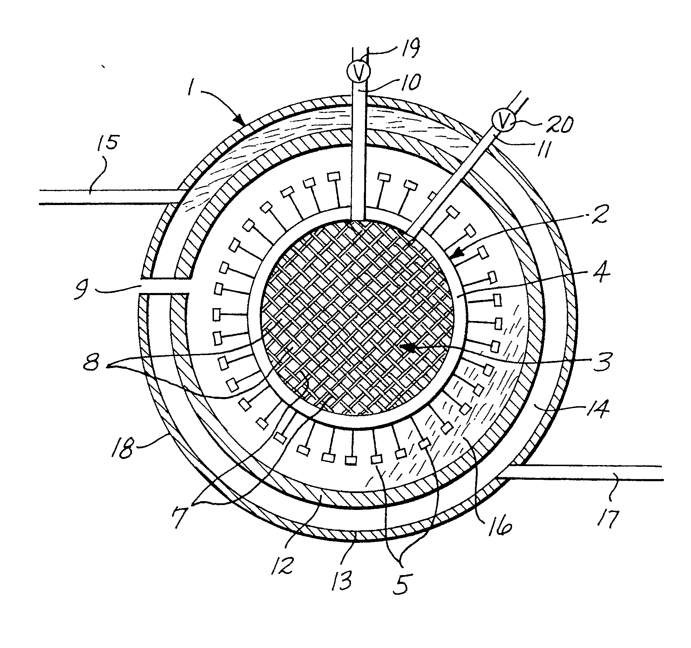

My invention will be better understood in terms of the figure and detailed description which follows.

DETAILED DESCRIPTION

The figure is a plan sectional view of a cell for generating heat by cold fusion showing the hydrogen-adsorbing cathode, the anode, the reaction vessel and heat exchange vessel.

Referring to the figure, a sectional view of a cell 1 for generating heat by cold fusion is shown. Cell 1 is electrolytic in nature, current passing between anode 2 and cathode 3. Anode 2 comprises ring 4 of conductive metal surrounding cathode 3. A plurality of T-shaped fins 5 are attached to ring 4 to increase its surface area.

Cathode 3 is a composite of a hydrogen adsorbing agent, such as an alumosilicate molecular sieve, an inert and/or hydrogen adsorbing metallic conductor such as platinum, or a zeolyte catalyst; and ${}^{11}B$ isotope, preferably amorphous elemental boron. The matrix is formed to be microporous with uniform lattice vacancies sized to allow retention of hydrogen nuclei at the active (cathodic) surface and the escape of helium or alpha particles, such as the adsorption/desorption processes occurring in packed-column gas-chromatographs or vapor-fractometers. The boron should be interspersed in the matrix as thoroughly as possible to increase the reaction probability between itself and the adsorbed hydrogen nuclei. Cathode 3 has a right circular cylindrical outside shape and a plurality of walls 7 and channels 8 for flow of electrolyte 16. The grid shape provides increased surface area along and within walls 7 for the cathodic adsorption of hydrogen and for nuclear reactions with boron to occur.

Reaction vessel 12 is preferably made of a strong, heat conductive, non-magnetic alloy such as austenitic stainless steel. Fluid inlet 9 and an optional outlet (not shown) are provided to augment electrolyte 16 with water or chemicals and remove spent reaction products. Vent 10 with pressure relief valve 19 is provided adjacent cathode 3 for releasing alpha particles and/or helium produced by fusion, and vent 11 with pressure relief valve 20 is provided at anode 2 to exhaust oxygen from electrolysis of water. If desired, the helium can be sparged through reaction vessel 12 to encourage mixing.

Reaction vessel 12 is surrounded by larger vessel 13 in which a heat exchange medium 14 is disposed. Heat from fusion reactions is transferred to medium 14 and collected for a use such as turbine power generation. Preferably, medium 14 is a fluid at reactor operating temperatures that is recirculated through inlet 15 and outlet 17. Medium 14 may be a liquid metal such as sodium, for example. Larger vessel 13 is insulated with a heat resistant layer of insulation 18, such as an ultra-lightweight aerogel of the type being developed for the National Aeronautics and Space Administration (NASA). An aerogel would also serve as a shield for any low-level radiation that may be produced by the reaction. One major advantage of this invention is that no neutron shielding is required since no or insignificant numbers of neutrons are produced.

Electrolyte 16 in reaction vessel 12 is water-based and preferably an aqueous solution of a boron compound such as boric acid. Electrolyte 16 can be replenished, as needed with water and chemicals. A further advantage of this invention is that ordinary water rather than heavy water is used in the electrolytic cell.

To operate fusion cell 1, a direct current is applied across the electrodes so that hydrogen ions are produced at cathode 3 and oxygen is produced at anode 2. The voltage is preferably in the range of from about 1 to 30 Volts, and the current density about 1 to 100 mA/cm$^2$. The oxygen is vented from anode 2 through vent 11 and pressure relief valve 20. The hydrogen ion is held in solution and adsorbed into cathode 3. The rate of electrolysis is preferably controlled by adjusting current density to maximize hydrogen adsorption.

At this time, the exact reaction mechanism of the nuclear fusion is not understood. However, the adsorbed hydrogen in the cathode is believed to fuse with ${}^{11}B$ nuclei by the reaction

$$p + {}^{11}B \rightarrow 3\alpha \ (8.7 \ MeV)$$

where the released energy is transformed to heat in the reaction vessel and removed through a heat exchanger. The calculated energy release is based on the resonance cross section of the constituent nuclei at 1 MeV or less. The fusion reaction and amount of heat liberated by the cell may be controlled by varying current and voltage across the electrodes and the temperature of the cell. Alpha particles are converted to helium and vented.

In a like practice, lithium is substituted for boron in the composite cathode and the fusion reaction

$$p + {}^{6}Li \rightarrow {}^{3}He + \alpha \ (4.0 \ MeV)$$

is carried out. The current, voltage and cell temperature are adjusted to optimize the reaction.

While my invention has been described in terms of specific embodiments thereof, other forms may be readily adapted by one skilled in the art. Accordingly, the scope of my invention is limited only in accordance with the following claims.

## Claims

1. An apparatus for conducting cold fusion comprising an electrically conductive anode; an electrically conductive cathode comprised of a constituent for selectively adsorbing hydrogen nuclei and releasing larger nuclei, and boron; a vessel for containing said electrodes; an electrolyte; means to vent gaseous reaction products; and means to carry away the heat generated by said fusion.

2. The method of producing heat energy by the cold fusion of hydrogen nuclei and nuclei of one or more elements selected from the group consisting of boron and lithium in an electrolytic cell.

3. A method of producing heat energy comprising the steps of immersing an anode and a cathode in an ionic aqueous solution in an electrolytic cell, said cathode comprising an electrically conductive metal constituent, boron and a selective hydrogen adsorber; applying an electric current across said electrodes such that hydrogen ions are produced and hydrogen nuclei are adsorbed by said cathode; fusing said adsorbed hydrogen nuclei with the nuclei of said boron in said cathode; and withdrawing heat from said fusion reaction from said cell.

4. A method of producing heat energy comprising the steps of immersing an anode and a cathode in an ionic aqueous solution in an electrolytic cell, said cathode comprising an electrically conductive metal constituent, lithium and a selective hydrogen adsorber; applying an electric current across said electrodes such that hydrogen ions are produced and hydrogen nuclei are adsorbed by said cathode; fusing said adsorbed hydrogen with the nuclei of said lithium in said cathode; and withdrawing heat from said fusion reaction from said cell.

5. The apparatus of claim 1 where the cathode comprises a molecular sieve or zeolyte structure that provides reaction sites and particle/atom/molecule migration control.

6. The apparatus of claim 3 where the cathode comprises a molecular sieve or zeolyte structure that provides reaction sites and particle/atom/molecule migration control.

7. The apparatus of claim 4 where the cathode comprises a molecular sieve or zeolyte structure that provides reaction sites and particle/atom/molecule migration control.